# FASCICULE DE BREVET EUROPEEN

(11) **EP 2 439 104 B1**
(45) Date de publication et mention de la délivrance du brevet: **08.05.2013**
(21) Numéro de dépôt: 11183874.4
(22) Date de dépôt: 04.10.2011
(51) Int. Cl.: B60N 2/48

(54) **Dispositif de blocage en coulissement d'une tige métallique d'association d'un appui-tête à un dossier de siège de véhicule automobile**
Blockiervorrichtung für das Gleiten einer Verbindungsmetallstange einer Kopfstütze an der Rückenlehne eines Kraftfahrzeugsitzes
Device for preventing the sliding of a metal rod for attaching a headrest to a backrest of an automotive vehicle seat

(30) Priorité: 07.10.2010 FR 1003977
(43) Date de publication de la demande: 11.04.2012
(73) Titulaire: Centre d'Etude et de Recherche pour l'Automobile (CERA), 51100 Reims (FR)
(72) Inventeur: Dauchez, Fernand, 02400 Bezu Saint Germain (FR)
(74) Mandataire: Sayettat, Julien Christian

(56) Documents cités:
- EP-A1- 0 875 417
- EP-A1- 1 473 188
- FR-A1- 2 908 357
- FR-A1- 2 930 207

## Description

L'invention concerne un dispositif de blocage en coulissement d'une tige crantée d'association d'un appui-tête à un dossier de siège de véhicule automobile et un siège ou un appui-tête comprenant un tel dispositif.

II est connu de réaliser un dispositif de blocage en coulissement d'une tige métallique d'association d'un appui-tête à un dossier de siège de véhicule automobile, ladite tige comprenant au moins un cran de blocage en coulissement, ledit dispositif comprenant un manchon de réception de ladite tige en coulissement et, solidaire dudit manchon, un tiroir à base de matériau plastique moulé monté mobile en translation radiale, ledit tiroir étant contraint en translation vers ledit manchon par un moyen de rappel élastique, ledit tiroir étant pourvu d'une pièce de crantage métallique, ladite pièce étant agencée pour pouvoir s'engager, sous l'effet dudit moyen de rappel, dans ledit cran lorsqu'ils sont en regard l'un de l'autre, pour bloquer ladite tige en coulissement, (cf. par exemple la figure 4 de FR 2 908 357 A1, correspondant au préambule de la revendication 1.

La présence de la pièce de crantage métallique est requise afin de permettre un crantage résistant à une sollicitation verticale de la tige lors d'un choc de la tête du passager sur l'appui-tête, notamment lorsque le cran est de faible profondeur, par exemple inférieure à 2,5 mm, ceci afin de limiter le phénomène d'amorce de rupture sur ladite tige.

Dans une telle réalisation, la mise en coulissement de la tige dans le manchon, par exemple à l'occasion d'un réglage en hauteur de l'appui-tête, conduit à une situation où la pièce de crantage glisse contre ladite tige.

Il en résulte un frottement métal contre métal conduisant à une abrasion de la tige, ce qui est préjudiciable en termes d'esthétique, et ceci d'autant plus que le moyen de rappel est puissant.

L'invention a pour but de pallier cet inconvénient.

A cet effet, et selon un premier aspect, l'invention propose un dispositif de blocage en coulissement d'une tige métallique d'association d'un appui-tête à un dossier de siège de véhicule automobile, ladite tige comprenant au moins un cran de blocage en coulissement, ledit dispositif comprenant un manchon de réception de ladite tige en coulissement et, solidaire dudit manchon, un tiroir à base de matériau plastique moulé monté mobile en translation radiale, ledit tiroir étant contraint en translation vers ledit manchon par un moyen de rappel élastique, ledit tiroir étant pourvu d'une pièce de crantage métallique, ladite pièce étant agencée pour pouvoir s'engager, sous l'effet dudit moyen de rappel, dans ledit cran lorsqu'ils sont en regard l'un de l'autre, pour bloquer ladite tige en coulissement, ladite pièce comprenant une zone d'engagement s'étendant selon un plan sensiblement horizontal, ladite zone étant pourvue d'un bord d'engagement dans ledit cran, ladite zone comprenant un évidement débouchant vers ledit bord, ledit dispositif étant caractérisé en ce que ledit évidement est rempli par un bloc dudit matériau plastique issu de matière dudit tiroir, ledit bloc saillant dudit bord de manière à former un patin évitant un contact entre ladite pièce et ladite tige lorsque ladite pièce est à distance dudit cran tout en permettant un engagement de ladite pièce dans ledit cran lorsqu'ils sont en regard l'un de l'autre.

Dans cette description, les termes de positionnement dans l'espace (vertical, horizontal,...) sont pris en référence au dispositif disposé dans le véhicule, le siège étant en configuration d'utilisation par un passager avec son dossier sensiblement vertical.

Avec l'agencement proposé, la mise en coulissement de la tige dans le manchon conduit à une situation où ce n'est pas la pièce de crantage qui glisse contre ladite tige mais le bloc à base de matériau plastique.

Il en résulte un frottement plastique contre métal qui ne crée pas d'abrasion de la tige.

Selon un deuxième aspect, l'invention propose un siège ou un appui-tête comprenant un tel dispositif.

D'autres particularités et avantages de l'invention apparaîtront dans la description qui suit, faite en référence aux figures jointes dans lesquelles :

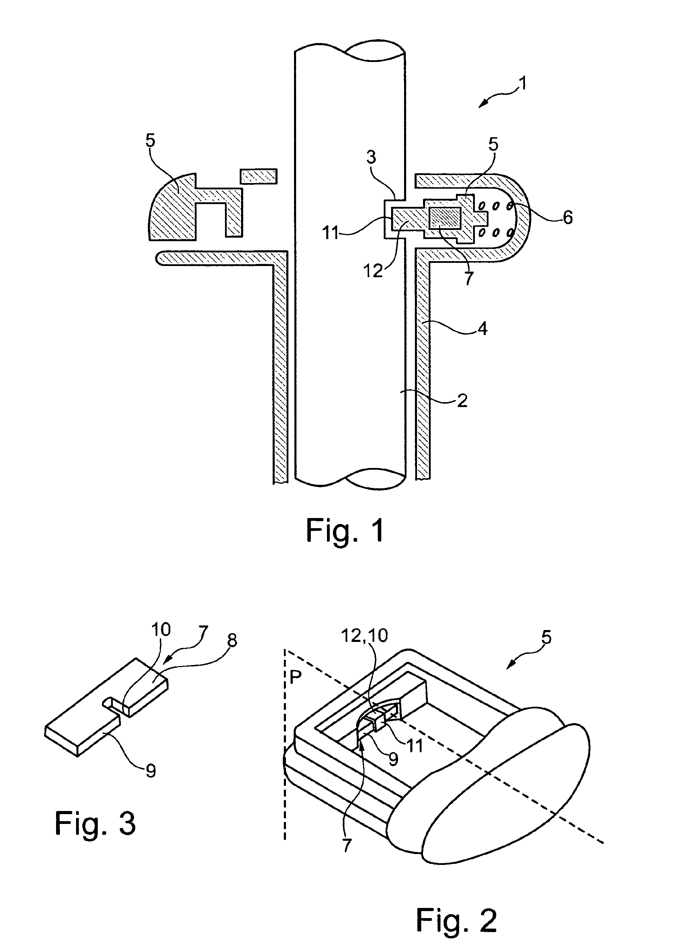

- la figure 1 est une vue schématique en coupe partielle, selon le plan vertical P de symétrie du tiroir représenté en figure 2, d'un dispositif selon un mode de réalisation, une tige étant insérée dans ledit dispositif, ledit dispositif étant en configuration de blocage du coulissement de la tige,
- la figure 2 est une vue en perspective schématique du tiroir du dispositif de la figure 1, ledit tiroir étant pourvu d'une pièce de crantage,
- la figure 3 est une vue en perspective de la pièce de crantage associée au tiroir de la figure 2.

En référence aux figures, on décrit à présent un dispositif 1 de blocage en coulissement d'une tige 2 métallique d'association d'un appui-tête, non représenté, à un dossier de siège, non représenté, de véhicule automobile, ladite tige comprenant au moins un cran 3 de blocage en coulissement, ledit dispositif comprenant un manchon 4 de réception de ladite tige en coulissement et, solidaire dudit manchon, un tiroir 5 à base de matériau plastique moulé monté mobile en translation radiale.

Le tiroir est contraint en translation vers ledit manchon par un moyen de rappel élastique 6, ici sous forme de ressort, ledit tiroir étant pourvu d'une pièce de crantage 7 métallique, ladite pièce étant agencée pour pouvoir s'engager, sous l'effet dudit moyen de rappel, dans ledit cran lorsqu'ils sont en regard l'un de l'autre, pour bloquer ladite tige en coulissement, ladite pièce comprenant une zone 8 d'engagement s'étendant selon un plan sensiblement horizontal.

La zone 8 est pourvue d'un bord 9 d'engagement dans ledit cran, ladite zone comprenant un évidement 10 débouchant vers ledit bord, ledit évidement étant rempli par un bloc 12 dudit matériau plastique issu de matière dudit tiroir, ledit bloc saillant dudit bord de manière à former un patin 11 évitant un contact entre ladite pièce et ladite tige lorsque ladite pièce est à distance dudit cran tout en permettant un engagement de ladite pièce dans ledit cran lorsqu'ils sont en regard l'un de l'autre.

Lorsque l'on parle d'un engagement de la pièce 7 dans le cran 3 lorsqu'ils sont en regard l'un de l'autre, cela signifie qu'une partie de la pièce 7 est cachée par le cran 3 lorsqu'elle est regardée selon une vue axiale en référence à l'axe de la tige 2.

Ainsi, la pièce 7 de crantage peut jouer son rôle de blocage de la tige 2 en coulissement.

Dans le cas d'une tige 2 présentant une courbure, la vue axiale est considérée en référence à l'axe de ladite tige au niveau du cran 3.

Selon une réalisation, le bloc 12 est saillant d'une cote inférieure à 0,5 mm, ceci afin de garantir un bon engagement de la pièce 7 dans le cran 3 lorsqu'ils sont en vis à vis l'un de l'autre

Selon la réalisation représentée, la zone 8 d'engagement s'étend sur la totalité de la pièce 7 de crantage.

Selon la réalisation représentée, la zone 8 d'engagement est sous forme d'une plaquette, l'évidement 10 étant sous forme d'une encoche.

De façon non représentée, la zone 8 d'engagement est sous forme d'un fil métallique, l'évidement 10 étant sous forme d'un repliement en U.

Selon la réalisation représentée, la pièce de crantage 7 est surmoulée par le tiroir 5.

On décrit à présent un siège de véhicule automobile comprenant un dossier et un dispositif 1, ledit dispositif étant monté en haut dudit dossier, de manière à recevoir en coulissement une tige issue d'un appui-tête.

On décrit enfin un appui-tête de siège de véhicule automobile comprenant un coussin d'appui et dispositif 1, ledit dispositif étant monté dans ledit coussin, de manière à recevoir en coulissement une tige issue d'un dossier.

## Revendications

1. Dispositif (1) de blocage en coulissement d'une tige (2) métallique d'association d'un appui-tête à un dossier de siège de véhicule automobile, ladite tige comprenant au moins un cran (3) de blocage en coulissement, ledit dispositif comprenant un manchon (4) de réception de ladite tige en coulissement et, solidaire dudit manchon, un tiroir (5) à base de matériau plastique moulé monté mobile en translation radiale, ledit tiroir étant contraint en translation vers ledit manchon par un moyen de rappel (6) élastique, ledit tiroir étant pourvu d'une pièce (7) de crantage métallique, ladite pièce étant agencée pour pouvoir s'engager, sous l'effet dudit moyen de rappel, dans ledit cran lorsqu'ils sont en regard l'un de l'autre pour bloquer ladite tige en coulissement, ladite pièce comprenant une zone (8) d'engagement s'étendant selon un plan sensiblement horizontal, ladite zone étant pourvue d'un bord (9) d'engagement dans ledit cran, ladite zone comprenant un évidement (10) débouchant vers ledit bord, ledit dispositif étant **caractérisé en ce que** ledit évidement est rempli par un bloc (12) dudit matériau plastique issu de matière dudit tiroir, ledit bloc saillant dudit bord de manière à former un patin (11) évitant un contact entre ladite pièce et ladite tige lorsque ladite pièce est à distance dudit cran tout en permettant un engagement de ladite pièce dans ledit cran lorsqu'ils sont en regard l'un de l'autre.

2. Dispositif selon la revendication 1, **caractérisé en ce que** le bloc (12) est saillant d'une cote inférieure à 0,5 mm.

3. Dispositif selon la revendication 1 ou 2, **caractérisé en ce que** la zone (8) d'engagement s'étend sur la totalité de la pièce (7) de crantage.

4. Dispositif selon l'une quelconque des revendications 1 à 3, **caractérisé en ce que** la zone (8) d'engagement est sous forme d'une plaquette, l'évidement (10) étant sous forme d'une encoche.

5. Dispositif selon l'une quelconque des revendications 1 à 3, **caractérisé en ce que** la zone (8) d'engagement est sous forme d'un fil métallique, l'évidement (10) étant sous forme d'un repliement en U.

6. Dispositif selon l'une quelconque des revendications 1 à 5 **caractérisé en ce que** la pièce (7) de crantage est surmoulée par le tiroir (5).

7. Siège de véhicule automobile comprenant un dossier et un dispositif selon l'une quelconque des revendications 1 à 6, ledit dispositif étant monté en haut dudit dossier.

8. Appui-tête de siège de véhicule automobile comprenant un coussin d'appui et dispositif selon l'une quelconque des revendications 1 à 6, ledit dispositif étant monté dans ledit coussin.

## Patentansprüche

1. Blockiervorrichtung (1) für das Gleiten einer Verbindungsmetallstange (2) einer Kopfstütze an der Rückenlehne eines Kraftfahrzeugsitzes, wobei die Stange mindestens eine Blockierrast (3) für das Gleiten aufweist, wobei die Vorrichtung eine Muffe (4) zur Aufnahme der geleitenden Stange umfasst, und fest verbunden mit der Muffe, einen Einschub (5) auf der Grundlage eines geformten Plastikmaterials, das beweglich in radialer Translation montiert ist, wobei der Einschub in Translation gegen die Muffe durch ein elastisches Rückholmittel (6) gespannt ist, wobei der Einschub mit einem metallischen Verzahnungsstück (7) ausgestattet ist, wobei das Stück angeordnet ist, um unter Einwirkung des Rückholmittels in die Rast einzugreifen, wenn sie einander gegenüber liegen, um die Stange in dem Stück zu blockieren, umfassend einen Eingriffsbereich (8), der sich in einer im Wesentlichen horizontale Ebene erstreckt, wobei der Bereich mit einem Rand (9) zum Eingriff in die Rast versehen ist, wobei der Bereich eine Aussparung (10) umfasst, die zu dem Rand hin mündet, wobei die Vorrichtung **dadurch gekennzeichnet ist, dass** die Aussparung mit einem Block (12) aus dem Plastikmaterial gefüllt ist, das aus dem Material des Einschubs stammt, wobei der Block von dem Rand derart hervorspringt, dass er ein eine Gleitbacke (11) bildet, wodurch ein Kontakt zwischen dem Stück und der Stange verhindert wird, wenn sich das Stück in einem Abstand von der Rast befindet, und gleichzeitig ein Eingreifen des Stücks in die Rast ermöglicht wird, wenn sie einander gegenüber liegen.

2. Vorrichtung nach Anspruch 1, **dadurch gekennzeichnet, dass** der Block (12) um einen Wert hervorsteht, der geringer als 0,5 mm ist.

3. Vorrichtung nach Anspruch 1 oder 2, **dadurch gekennzeichnet, dass** sich der Eingriffsbereich (8) auf dem gesamten Verzahnungsstück (7) erstreckt.

4. Vorrichtung nach einem der Ansprüche 1 bis 3, **dadurch gekennzeichnet, dass** der Eingriffsbereich (8) die Form eines Plättchens aufweist, wobei die Aussparung (10) die Form eines Schlitzes aufweist.

5. Vorrichtung nach einem der Ansprüche 1 bis 3, **dadurch gekennzeichnet, dass** der Eingriffsbereich (8) die Form eines Metalldrahts aufweist, wobei die Aussparung (10) die Form einer U-Faltung aufweist.

6. Vorrichtung nach einem der Ansprüche 1 bis 5, **dadurch gekennzeichnet, dass** das Verzahnungsstück (7) vom Einschub (5) überformt ist.

7. Kraftfahrzeugsitzes, umfassend eine Rückenlehne und eine Vorrichtung nach einem der Ansprüche 1 bis 6, wobei die Vorrichtung auf dem oberen Teil der Rückenlehne montiert ist.

8. Kopfstütze eines Kraftfahrzeugsitzes, umfassend ein Stützkissen und eine Vorrichtung nach einem der Ansprüche 1 bis 6, wobei die Vorrichtung in dem Kissen montiert ist.

## Claims

1. Device (1) for preventing the sliding of a metal rod (2) for attaching a headrest to a backrest of an automotive vehicle seat, said rod comprising at least one notch (3) for preventing the sliding, said device comprising a sleeve (4) for receiving said rod in sliding and, integral with said sleeve, a slide valve (5) with a moulded plastic material base mounted mobile in radial translation, said slide valve being constrained in translation towards said sleeve by an elastic means of recall (6), said slide valve being provided with a metal notching part (7), said part being arranged in order to be able to engage, under the effect of said means of recall, into said notch when facing one another in order to block said rod in sliding, said part comprising an engaging zone (8) extending according to a substantially horizontal plane, said zone being provided with an edge (9) for engaging in said notch, said zone comprising a recess (10) opening towards said edge, said device being **characterised in that** said recess is filled with a block (12) of said plastic material coming from the material of said slide valve, said block protruding from the edge in such a way as to form a track shoe (11) avoiding contact between said part and said rod when said part is at a distance from said notch while permitting an engagement of said part in said notch when they are facing one another.

2. Device according to claim 1, **characterised in that** the block (12) is protruding by a distance less than 0.5 mm.

3. Device according to claim 1 or 2, **characterised in that** the engaging zone (8) extends over the entire notching part (7).

4. Device according to any of claims 1 to 3, **characterised in that** the engaging zone (8) is in the form of a plate, the recess (10)being in the form of a notch.

5. Device according to any of claims 1 to 3, **characterised in that** the engaging zone (8) is in the form of a metal wire, the recess (10) being in the form of a U-shaped folding.

6. Device according to any of claims 1 to 5 **characterised in that** the notching part (7) is over-moulded by the slide valve (5).

7. Automotive vehicle seat comprising a backrest and a device according to any of claims 1 to 6, said device being mounted at the top of said backrest.

8. Headrest of an automotive vehicle seat comprising a rest cushion and device according to any of claims 1 to 6, said device being mounted in said cushion.
